# EUROPEAN PATENT APPLICATION

(11) **EP 4 501 698 A1**
(43) Date of publication of application: **05.02.2025**
(21) Application number: 24187653.1
(22) Date of filing: 10.07.2024
(51) Int. Cl.: B60L 53/14, B60L 53/22, B60L 53/24, B60L 55/00, H02J 7/02, H02M 1/42

(54) **IN-VEHICLE CHARGING DEVICE**

(30) Priority: 01.08.2023 JP 2023125373
(71) Applicant: Aisin Corporation, Aichi 448-8650 (JP)
(72) Inventor: SAHA, Subrata, Kariya, 448-8650 (JP); NAKAMURA, Keisuke, Kariya, 448-8650 (JP); TAGUCHI, Shin, Kariya, 448-8650 (JP)
(74) Representative: Kramer Barske Schmidtchen Patentanwälte PartG mbB

(57) **Abstract**

An in-vehicle charging device (10) is mounted on a vehicle including a rotating electrical machine (70) that includes coils (7) of multiple phases connected to each other at a neutral point (7N) and serves as a driving power source of a wheel, an inverter (5) that converts power between a direct current (DC) and an alternating current (AC) of multiple phases, and a DC power supply (3) connected to the rotating electrical machine (70) via the inverter (5), and charges the DC power supply (3) with power supplied from an external AC power supply (4), the in-vehicle charging device (10) including: an AC-DC converter (1) that converts power between AC power on the external AC power supply (4) side and first DC power; and a DC-DC converter (2) that converts power between the first DC power and second DC power on the DC power supply (3) side, in which the AC-DC converter (1) includes a current source active rectifier (17) having a power factor correct function, the DC-DC converter (2) includes a chopper circuit including a reactor disposed on the AC-DC converter (1) side and a half-bridge circuit disposed on the DC power supply (3) side, the reactor is configured using a plurality of the coils (7), the half-bridge circuit is configured using the inverter (5), and the current source active rectifier (17) includes a bidirectional switching device.

## Description

### TECHNICAL FIELD

The present disclosure relates to an in-vehicle charging device.

### BACKGROUND DISCUSSION

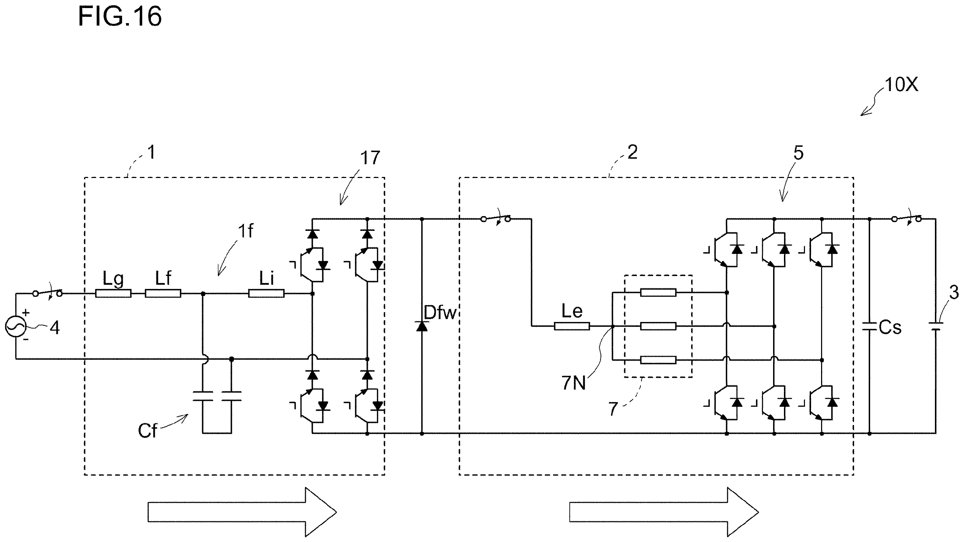

Christelle Saber et al. have published a paper on an in-vehicle charging device for charging a battery (direct current (DC) power supply) for an electric vehicle. Saber et al. have considered power factor correct (PFC) in an in-vehicle charger in which cost is reduced by using components of a vehicle driving device (traction power train) for the in-vehicle charging device. As illustrated in Fig. 16, the in-vehicle charging device to be considered by Saber et al. includes a unidirectional current source active rectifier 17 (CSAR) having a buck function at an input stage (AC-DC converter 1) from an external alternating current (AC) power supply 4, and includes a boost converter at an output stage (DC-DC converter 2) to a DC power supply 3 following the CSAR. That is, an in-vehicle charging device is disclosed in which an AC-DC buck converter and a DC-DC boost converter are disposed in this order from the external AC power supply 4 toward the DC power supply 3.

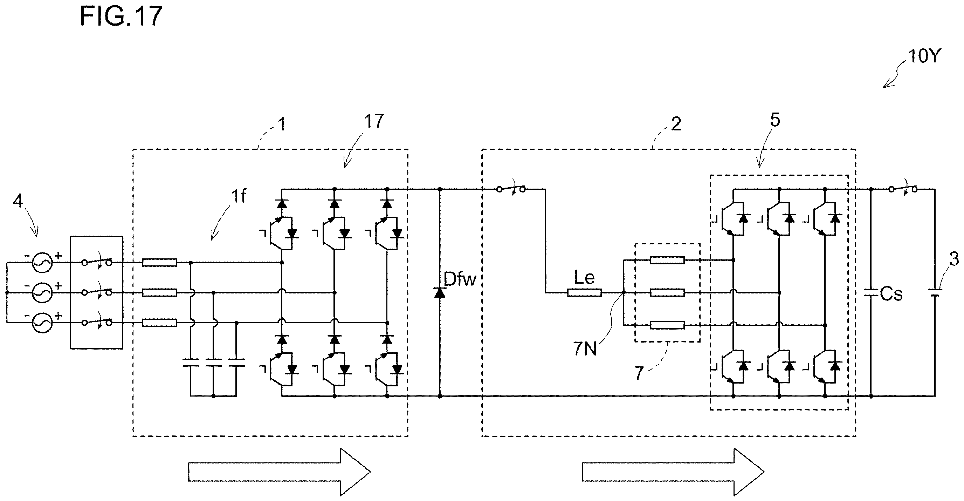

In this paper, Saber et al. consider an in-vehicle charging device supplied with power from a single-phase external AC power supply 4. JP 2011-526775 A (family: US 2012/0286740 A) discloses an example of an in-vehicle charging device to which power is supplied from a three-phase external AC power supply 4 as illustrated in Fig. 17. That is, this in-vehicle charging device also has a configuration in which an AC-DC buck converter and a DC-DC boost converter are disposed in this order from the external AC power supply 4 toward the DC power supply 3.

By the way, in recent years, it has been proposed to use a DC power supply of an electric vehicle or a hybrid vehicle as an emergency AC power supply at the time of disaster or the like. However, the in-vehicle charging device described above with reference to Figs. 16 and 17 supports only unidirectional power supply from the external AC power supply to the DC power supply.

A need thus exists for an in-vehicle charging device that can also use a vehicle driving device, charge an in-vehicle DC power supply with an external AC power supply, and output AC power from the DC power supply.

### SUMMARY

An in-vehicle charging device is mounted on a vehicle including a rotating electrical machine that includes coils of multiple phases connected to each other at a neutral point and serves as a driving power source of a wheel, an inverter that converts power between a direct current (DC) and an alternating current (AC) of multiple phases, and a DC power supply connected to the rotating electrical machine via the inverter, and charges the DC power supply with power supplied from an external AC power supply, the in-vehicle charging device including: an AC-DC converter that converts power between AC power on the external AC power supply side and first DC power; and a DC-DC converter that converts power between the first DC power and second DC power on the DC power supply side, in which the AC-DC converter includes a current source active rectifier having a power factor correct function, the DC-DC converter includes a chopper circuit including a reactor disposed on the AC-DC converter side and a half-bridge circuit disposed on the DC power supply side, the reactor is configured using a plurality of the coils, the half-bridge circuit is configured using the inverter, and the current source active rectifier includes a bidirectional switching device.

With this configuration, the current source active rectifier having a power factor correct function in the AC-DC converter includes a bidirectional switching device. That is, the current source active rectifier is configured using a bidirectional switching device as a switching device. The bidirectional switching device is an element capable of causing a current to flow bidirectionally, and has a withstand voltage equivalent to a voltage having both positive and negative polarities with respect to the element. Therefore, it is easy to construct the AC-DC converter including the current control type active rectifier circuit. A voltage control type AC-DC converter requires a large-capacity capacitor. However, by using a current control type AC-DC converter, a large-capacity capacitor is unnecessary, and the component cost can be reduced and an increase in size of the device can be suppressed. In addition, a current source active rectifier configured using a bidirectional switching device is a current source active rectifier capable of bidirectional power conversion. Therefore, not only the power conversion from an AC to a DC but also the power conversion from a DC to an AC can be performed. Therefore, the DC power supply of the electric vehicle or the hybrid vehicle can also be used as an emergency AC power supply. As described above, with this configuration, it is possible to provide an in-vehicle charging device that can also use a vehicle driving device, charge an in-vehicle DC power supply with an external AC power supply, and output AC power from the DC power supply.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic circuit block diagram of a drive control system for a rotating electrical machine;
Fig. 2 is a circuit block diagram illustrating a first example of an in-vehicle charging device using the drive control system of the rotating electrical machine;
Fig. 3 is a diagram illustrating a positive current loop when charging an output capacitor in the in-vehicle charging device that functions as an AC-DC buck converter when charging a DC power supply;
Fig. 4 is a diagram illustrating a reflux loop of a positive current in the in-vehicle charging device functioning as the AC-DC buck converter;
Fig. 5 is a diagram illustrating a negative current loop when charging the output capacitor in the in-vehicle charging device that functions as the AC-DC buck converter when charging the DC power supply;
Fig. 6 is a diagram illustrating a reflux loop of a negative current in the in-vehicle charging device functioning as the AC-DC buck converter;
Fig. 7 is a diagram illustrating a positive current loop when charging a reactor in the in-vehicle charging device that functions as an AC-DC boost converter when charging the DC power supply;
Fig. 8 is a diagram illustrating a reflux loop of a positive current in the in-vehicle charging device functioning as the AC-DC boost converter;
Fig. 9 is a diagram illustrating a negative current loop when charging the reactor in the in-vehicle charging device that functions as the AC-DC boost converter when charging the DC power supply;
Fig. 10 is a diagram illustrating a reflux loop of a negative current in the in-vehicle charging device functioning as the AC-DC boost converter;
Fig. 11 is a circuit block diagram illustrating a second example of the in-vehicle charging device using the drive control system of the rotating electrical machine;
Fig. 12 is a circuit block diagram illustrating a third example of the in-vehicle charging device using the drive control system of the rotating electrical machine;
Fig. 13 is a diagram illustrating an example of a positive current loop when the in-vehicle charging device of the third example is supplied with power from an external DC power supply of three phases;
Fig. 14 is a diagram illustrating an example of a positive current reflux loop in the in-vehicle charging device of the third example;
Fig. 15 is a diagram illustrating an example of a positive current loop when the in-vehicle charging device of the third example is supplied with power from an external DC power supply of a single phase;
Fig. 16 is a circuit block diagram illustrating a conventional example of a charging device using a drive control system of a rotating electrical machine that charges a DC power supply with power from an AC external power supply of a single phase; and
Fig. 17 is a circuit block diagram illustrating a conventional example of a charging device using a drive control system of a rotating electrical machine that charges a DC power supply with power from an AC external power supply of three phases.

### DETAILED DESCRIPTION

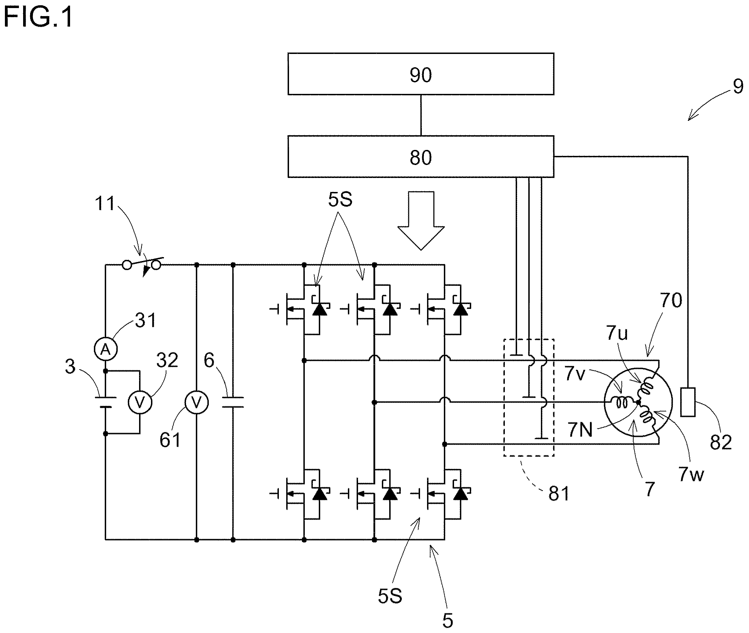

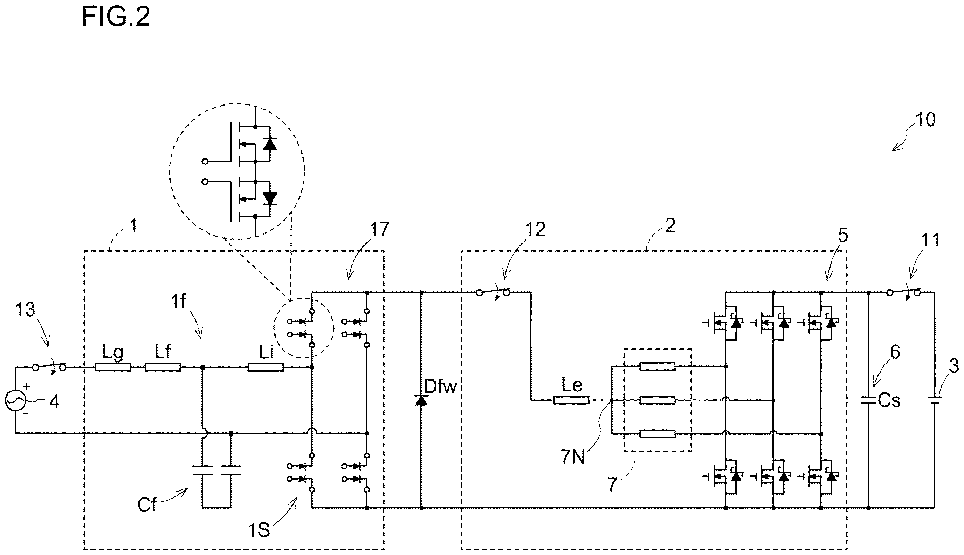

Hereinafter, an embodiment of an in-vehicle charging device will be described with reference to the drawings. The circuit block diagram of Fig. 1 schematically illustrates a drive control system of a rotating electrical machine 70, and the circuit block diagram of Fig. 2 illustrates a first example of an in-vehicle charging device 10 using the drive control system of the rotating electrical machine 70. The in-vehicle charging device 10 is a device that charges a DC power supply 3 included in a vehicle driving device 9 as illustrated in Fig. 1 in a state where the DC power supply 3 is mounted on the vehicle. As illustrated in Fig. 1, the vehicle driving device 9 of the present embodiment includes a rotating electrical machine 70 serving as a driving power source of wheels of a hybrid vehicle, an electric vehicle, or the like, an inverter 5 that converts power between a direct current (DC) and an alternating current (AC) of multiple phases (here, three phases), and a DC power supply 3 connected to the inverter 5. Note that the vehicle driving device 9 is not prevented from including other driving power sources such as an internal combustion engine (not illustrated) in addition to the rotating electrical machine 70.

As illustrated in Fig. 2, the in-vehicle charging device 10 is a device that charges the DC power supply 3 of the vehicle driving device 9 with power supplied from the external AC power supply 4 (grid power supply), and is a device called an onboard charger. The in-vehicle charging device 10 is configured to share a part with the vehicle driving device 9. Specifically, the inverter 5 and coils 7 of the rotating electrical machine 70 are shared. A DC link capacitor 6 is also used as an output capacitor Cs of the in-vehicle charging device 10. Note that all or at least a part of a control device (not illustrated) that controls a switching device, a contactor, and the like included in the in-vehicle charging device 10 may be shared with a control device 80 that controls the vehicle driving device 9.

As illustrated in Fig. 1, the vehicle driving device 9 includes a control device 80 that controls a rotating electrical machine 70 serving as a driving power source of the vehicle, and the control device 80 performs current feedback control to perform drive control of the rotating electrical machine 70. The rotating electrical machine 70 to be driven is an interior permanent magnet synchronous motor (IPMSM) including a stator in which the coils 7 (stator coils) of multiple phases (N phases where N is any natural number; a three-phase form where N=3 is exemplified in the present embodiment) are disposed, and a rotor in which a permanent magnet is disposed in a rotor core. Such a configuration is known, and illustration of the stator core, the stator, the rotor core, the rotor, the permanent magnet, and the like is omitted in the present embodiment. In the present embodiment, a Y-type (star type) form in which the coils 7 of three phases are short-circuited at a neutral point 7N is illustrated. However, the rotating electrical machine 70 may include, for example, two sets of coils 7 of three phases, and may be driven by AC of six phases. Note that the rotating electrical machine 70 can function as both an electric motor and a generator. When the rotating electrical machine 70 functions as an electric motor, the rotating electrical machine 70 is in a powering state, and when the rotating electrical machine 70 functions as a generator, the rotating electrical machine 70 is in a regeneration state.

As illustrated in Fig. 1, the vehicle driving device 9 includes the inverter 5. The inverter 5 is connected to the AC rotating electrical machine 70 and the DC power supply 3 to convert power between an AC and a DC of multiple phases. A pair of DC side terminals of the inverter 5 is connected to a positive electrode terminal and a negative electrode terminal of the DC power supply 3. AC side terminals of multiple phases of the inverter 5 are connected to the respective coils 7 of multiple phases. In the present embodiment, the inverter 5 includes a U-phase arm, a V-phase arm, and a W-phase arm as arms (also referred to as legs) of multiple phases. Each of the arms is formed by connecting an upper-stage side switching device disposed on the positive electrode side and the lower-stage side switching device disposed on the negative electrode side in series. A midpoint of each arm, that is, a connection point between the upper-stage side switching device and the lower-stage side switching device is connected to the corresponding coil 7. Specifically, the midpoint of the U-phase arm and a U-phase coil 7u are connected, the midpoint of the V-phase arm and a V-phase coil 7v are connected, and the midpoint of the W-phase arm and a W-phase coil 7w are connected.

A smoothing capacitor (DC link capacitor 6) that smooths a voltage (DC link voltage Vdc) between the positive electrode and the negative electrode is provided on the DC side of the inverter 5. A voltage sensor (DC link voltage sensor 61) that detects the DC link voltage is also provided on the DC side of the inverter 5. To distinguish the DC link capacitor 6 from a capacitor (second DC link capacitor Cd) that smooths the DC link voltage (first DC voltage) of the in-vehicle charging device 10 to be described later, the DC link capacitor 6 is referred to as "first DC link capacitor".

The DC power supply 3 includes, for example, a rechargeable secondary battery (battery) such as a lithium ion battery, an electric double layer capacitor, and the like. As in the present embodiment, when the rotating electrical machine 70 is a driving power source for a vehicle, the DC power supply 3 is a high-voltage, high-capacity DC power supply, and the rated power supply voltage is, for example, 200 to 800 [V]. In many cases, the DC power supply 3 is configured to be able to connect and disconnect electrical connection to and from the inverter 5 and the rotating electrical machine 70 by operation of a main switch (ignition switch) or the like of the vehicle. For example, the DC power supply 3 is connected to the inverter 5 and the rotating electrical machine 70 via a main contactor 11 including a relay or the like. The DC power supply 3 also includes a current sensor (battery current sensor 31) that detects an input/output current to/from the DC power supply 3, and a voltage sensor (battery voltage sensor 32) that detects a terminal voltage of the DC power supply 3. Note that the relay may be a mechanical relay or a semiconductor relay (solid state relay). Hereinafter, the same applies to other contactors.

Although not illustrated, for example, when the DC power supply 3 is a lithium ion battery or the like, a battery management system (BMS) is often provided. A secondary battery such as a lithium ion battery includes a plurality of cells (battery cells). The battery management system is a battery management control system that performs (1) prevention of overcharge and overdischarge of a cell, (2) prevention of overcurrent from flowing through a cell, (3) temperature management of a cell, (4) calculation of a state of charge (SOC), (5) equalization of a cell voltage, and the like. The battery current sensor 31 and the battery voltage sensor 32 described above may be configured as a part of the battery management system.

As illustrated in Fig. 1, the inverter 5 includes a plurality of switching devices 5S. The present embodiment exemplifies a form in which a field effect transistor (FET) is used as the switching device 5S. In addition to the FET, an insulated gate bipolar transistor (IGBT) may be used for the switching device 5S. In the present embodiment, a freewheel diode is connected in parallel to each switching device 5S with a direction from the negative electrode to the positive electrode (direction from the lower-stage side to the upper-stage side) as a forward direction. As a matter of course, when a body diode is used or when reverse conduction in a wide bandgap semiconductor transistor made of enhanced mode gallium nitride (E-GaN) is used, the freewheel diode of such a form may not be provided.

As illustrated in Fig. 1, the inverter 5 is controlled by the control device 80. The control device 80 is constructed using a logic circuit such as a microcomputer as a core member. For example, the control device 80 drives the rotating electrical machine 70 via the inverter 5 by performing current feedback control on the basis of a target torque (torque command) of the rotating electrical machine 70 provided as a request signal from another control device such as a vehicle control device 90 which is one of host control devices. Note that an operating voltage of a logic circuit element such as a microcomputer is generally 5 volts or less. In the present embodiment, a control signal generated by the logic circuit element is transmitted to the inverter 5 via a drive circuit, which is not illustrated for simplicity. Alternatively, it may be considered that the control device 80 includes a drive circuit.

Actual currents flowing through the coils 7 of respective phases of the rotating electrical machine 70 are detected by a current sensor (motor current sensor 81), and the control device 80 acquires the detection result. The magnetic pole position (electrical angle) and the rotational speed (angular velocity) of the rotor of the rotating electrical machine 70 at each time point are detected by a rotation sensor 82 such as, for example, a resolver or an inductive position sensor, and the control device 80 acquires the detection result. The control device 80 executes current feedback control using the detection results of the motor current sensor 81 and the rotation sensor 82. The control device 80 includes various functional units for current feedback control, and each functional unit is realized by cooperation of hardware such as a microcomputer and software (program).

As described above, the rotating electrical machine 70 connected to the DC power supply 3 via the inverter 5 functions as an electric motor by the power supplied from the DC power supply 3, and can also function as a generator to charge the DC power supply 3. For example, in a hybrid vehicle, mechanical energy can be supplied to the rotating electrical machine 70 by power of an internal combustion engine or the like to cause the rotating electrical machine 70 to generate power, but there are few opportunities for power generation, and the DC power supply 3 cannot be sufficiently charged in some cases. In addition, in an electric vehicle in which only the rotating electrical machine 70 is mounted as a driving power source, power generation is limited to that by mechanical energy from wheels in inertial traveling or the like, and the DC power supply 3 cannot be sufficiently charged in many cases. In the hybrid vehicle, sometimes the energy efficiency is better when the electric power is supplied from the outside than when the electric power is generated by the rotating electrical machine 70. For this reason, it is preferable that the DC power supply 3 can be charged by an external power supply in a state where the DC power supply 3 is mounted on the vehicle.

When the DC power supply 3 is charged by an external power supply, an in-vehicle charging device is preferably mounted on the vehicle. The external power supply is often AC because it receives power from a commercial power supply. Therefore, the in-vehicle charging device is configured to have a power conversion function from an AC to a DC. An AC-DC converter including an inductor and a bridge circuit including a switching device is known as a circuit for converting power from AC to DC. The conversion from an AC to a DC can be realized by a rectifier circuit using a rectifier element such as a diode, but power conversion is preferably performed in a state where a power factor defined by a phase of an AC voltage and a current is close to "1". For this reason, the AC-DC converter often includes a power factor correction circuit using a switching device so that the power factor can be corrected.

The in-vehicle charging device including such a power conversion circuit tends to have a large circuit scale, but the opportunity to charge the DC power supply 3 is less than the opportunity to drive the wheels. Therefore, it is preferable that the in-vehicle charging device has a small-scale configuration. When the DC power supply 3 is charged by the external power supply, the vehicle is stopped (parked). Therefore, the inverter 5 including the switching device and the coils 7 of the rotating electrical machine 70 having inductance are not used to drive the wheels when the DC power supply 3 is charged by the external power supply. Therefore, it is conceivable to use the inverter 5 and the coils 7 to form an in-vehicle charging device.

Fig. 16 illustrates a conventional in-vehicle charging device (first charging device 10X) also exemplified in the background art. Portions corresponding to those of the in-vehicle charging device 10 of the present embodiment are also denoted by the same reference numerals. The first charging device 10X also uses a traction power train that drives wheels. Similarly to the in-vehicle charging device 10 of the present embodiment, the first charging device 10X also uses the coils 7 in which the inverter 5 (traction inverter) and the coils 7 (electric machine windings of the rotating electrical machine) are used for the DC-DC converter 2, which is an output stage to the DC power supply 3, as a reactor (filtering inductor) similarly to the in-vehicle charging device 10 of the present embodiment. In the inverter 5 having three-phase arms (legs are also synonymous), the switching devices on the upper-stage side are collectively subjected to switching control so as to be apparent one arm, and the switching devices on the lower-stage side are collectively subjected to switching control.

As illustrated in Fig. 16, the first charging device 10X includes the unidirectional current source active rectifier 17 (CSAR) having a buck function in the AC-DC converter 1 which is an input stage from the external AC power supply 4. The current source active rectifier includes a full-bridge circuit using a switching device, and is configured as a totem pole type power factor correction circuit. One arm of the full-bridge circuit is configured by sequentially connecting, from the positive electrode side to the negative electrode side of the DC, one diode having a cathode connected to the positive electrode side, two switching devices having a freewheel diode connected in parallel in a forward direction from the positive electrode side to the negative electrode side, and one diode having an anode connected to the negative electrode side in this order. A filter 1f (inductor-capacitor filter) including a filter inductor Lf and a filter capacitor Cf is disposed between the external AC power supply 4 and the current source active rectifier 17. A differential mode inductor Lg is disposed between the filter 1f and the external AC power supply 4.

Although detailed description is omitted, the same applies to the in-vehicle charging device (second charging device 10Y) that charges the DC power supply 3 with the power from the external AC power supply 4 of three-phases illustrated in Fig. 17.

In the present embodiment, the in-vehicle charging device 10 that is mounted on a vehicle including the rotating electrical machine 70 that includes the coils 7 of multiple phases connected to each other at the neutral point 7N and serves as a driving power source of wheels, an inverter 5 that converts power between DC and AC of the multiple phases, and a DC power supply 3 connected to the rotating electrical machine 70 via the inverter 5, and charges the DC power supply 3 with power supplied from an external AC power supply 4 is configured as follows. That is, as illustrated in Fig. 2, the in-vehicle charging device 10 includes the AC-DC converter 1 that converts power between AC power on the external AC power supply 4 side and first DC power, and the DC-DC converter 2 that converts power between first DC power and second DC power on the DC power supply 3 side. The AC-DC converter 1 includes the current source active rectifier 17 having a power factor correct function, and the DC-DC converter 2 includes a chopper circuit including a reactor disposed on the AC-DC converter 1 side and a half-bridge circuit disposed on the DC power supply 3 side. In the first example illustrated in Fig. 2, the current source active rectifier 17 includes a full-bridge circuit including four switching devices 1S.

In the DC-DC converter 2, a reactor is configured using a plurality of coils 7, and the half-bridge circuit is configured using the inverter 5. Specifically, the coils 7 of multiple phases connected in parallel are an apparent one coil, and constitute a reactor together with an inductor Le described later. In addition, the arms of each phase connected in parallel of the inverter 5 are apparent one-phase arms and constitute a half-bridge circuit. The neutral point 7N of the coils 7 is connected to the AC-DC converter 1 via the inductor Le. Note that the neutral point 7N may be connected to the AC-DC converter 1 without including the inductor Le. The end of the coil 7 of each phase on the side opposite to the neutral point 7N is connected to the midpoint of the arm of each phase of the inverter 5 (the connection point between the upper-stage switching device and the lower-stage switching device of each arm). Note that the reactor may be referred to as a choke coil.

The current source active rectifier 17 of the AC-DC converter 1 includes a bidirectional switching device. Specifically, one arm of the full-bridge circuit constituting the current source active rectifier 17 is configured by connecting two bidirectional switching devices in series from the positive electrode side toward the negative electrode side of DC. The bidirectional switching device is an element capable of causing a current to flow bidirectionally, and has a withstand voltage equivalent to a voltage having both positive and negative polarities with respect to the element. Therefore, it is easy to construct the AC-DC converter 1 including the current control type active rectifier circuit. A voltage control type AC-DC converter requires a large-capacity capacitor. However, by using a current control type AC-DC converter, a large-capacity capacitor is unnecessary, and the component cost can be reduced and an increase in size of the device can be suppressed.

The current source active rectifier 17 is not a unidirectional current source active rectifier as in the first charging device 10X illustrated in Fig. 16, but a bidirectional current source active rectifier. Therefore, not only the power conversion from an AC to a DC but also the power conversion from a DC to an AC can be performed. Therefore, the DC power supply 3 of the electric vehicle or the hybrid vehicle can also be used as an emergency AC power supply.

Note that Fig. 2 illustrates a form in which a filter 1f (inductor-capacitor filter) including a filter inductor Lf and a filter capacitor Cf is disposed between the external AC power supply 4 and the current source active rectifier 17 similarly to the first charging device 10X. In addition, a form in which the differential mode inductor Lg is disposed between the filter 1f and the external AC power supply 4 is illustrated. Furthermore, between the AC-DC converter 1 and the DC-DC converter 2, a freewheel diode (DC link freewheel diode Dfw) is disposed with the direction from the negative electrode toward the positive electrode in the first DC power as the forward direction.

In the configuration in which the external AC power supply 4 and the DC power supply 3 are not electrically independent from each other, when a short-circuit failure or the like occurs in the external AC power supply 4, a large short-circuit current may flow through the DC power supply 3 and the in-vehicle device connected to the DC power supply 3. However, in the present embodiment, by providing the DC link freewheel diode Dfw, even if a short circuit occurs between the positive and negative electrodes at the output end of the AC-DC converter 1 (or the input end of the DC-DC converter 2), the current flowing from the positive electrode to the negative electrode can be cut off by the DC link freewheel diode Dfw. Therefore, even if the in-vehicle charging device 10 is not provided with, for example, an insulation circuit using a transformer, there is a possibility of being able to prepare for a short-circuit failure or the like of the external AC power supply 4 as described above. That is, it is possible to suppress an increase in circuit scale of the in-vehicle charging device 10.

It can be said that the in-vehicle charging device 10 of the present embodiment capable of bidirectional power conversion of power conversion from an AC to a DC (second DC power) and power conversion from the DC (second DC power) to the AC is configured as follows. When the in-vehicle charging device 10 charges the DC power supply 3 with the external AC power supply 4, the AC-DC converter 1 functions as an AC-DC buck converter unity power factor (UPF), and the DC-DC converter 2 functions as a DC-DC boost converter. When the in-vehicle charging device 10 functions as an emergency AC power supply that outputs AC power by the power stored in the DC power supply 3, the DC-DC converter 2 functions as the DC-DC buck converter, and the AC-DC converter 1 functions as a DC-AC boost converter UPF.

In the present embodiment, when the in-vehicle charging device 10 charges the DC power supply 3 with the external AC power supply 4, the DC-DC converter 2 can also function as the DC-DC buck converter. In other words, the in-vehicle charging device 10 can have both a function of the AC-DC buck converter and a function of the AC-DC boost converter as a function of power conversion from the AC power to the second DC power (battery power) as a whole.

Some DC power supplies 3 mounted on a vehicle for supplying electric power to the rotating electrical machine 70 that drives wheels have different rated voltages. Even in the same vehicle type, the rated voltage of the DC power supply 3 may be different depending on the grade. For example, in an advanced grade, the DC power supply 3 having a higher rated voltage may be mounted in order to obtain a higher output. When this voltage is higher than a voltage obtained by performing AC-DC conversion from the external AC power supply 4 which is a general commercial power supply, boost is required in the DC-DC converter 2. When the in-vehicle charging device 10 having different configurations according to the vehicle is mounted, a scale merit cannot be obtained, and a reduction in cost of the in-vehicle charging device 10 is limited. However, since the DC-DC converter 2 is configured to have a buck/boost function, the same hardware is used, and the same in-vehicle charging device 10 can be deployed to various grades and various vehicle types by changing a control form (for example, software such as a program). For example, the in-vehicle charging device 10 having the same hardware configuration can be used in both the case where the rated voltage of the DC power supply 3 is 400 volts and the case where the rated voltage of the DC power supply 3 is 800 volts.

As described above, in the present embodiment, the reactor of the DC-DC converter 2 is configured by a series circuit of the plurality of coils 7 connected in parallel and the inductor Le (additional inductor) or an external inductor connected to the neutral point 7N of the plurality of coils 7.

When the DC-DC converter 2 functions as a boost converter, energy is stored in the reactor. Since the coils 7 of the rotating electrical machine 70 are designed to have a high power density, the inductance of the reactor may be small. By connecting the inductor Le in series to the coils 7, it is possible to set a sufficient inductance in the reactor by also using the inductance of the inductor Le, and to appropriately secure the function as a boost converter.

As illustrated in Fig. 2, the in-vehicle charging device 10 includes the main contactor 11, a function switching contactor 12, and a grid contactor 13. These contactors include relays and the like, and are controlled by the control device 80, or the control device 80 and the vehicle control device 90. As described above with reference to Fig. 1, the control device 80 is included in the drive control system of the rotating electrical machine, and the control device 80 is also shared by the drive control of the rotating electrical machine 70 and the charge control of the DC power supply 3.

As described above with reference to Fig. 1, the main contactor 11 is installed so as to be able to connect and disconnect electrical connection between the DC power supply 3 and the inverter 5. The main contactor 11 is closed both when the inverter 5 functions as the vehicle driving device 9 and when the inverter 5 functions as the in-vehicle charging device 10. When the DC power supply 3 is not charged and the vehicle is parked, the electrical connection between the DC power supply 3 and the inverter 5 can be cut off by opening the main contactor 11. The grid contactor 13 is installed so that the electrical connection between the external AC power supply 4 and the AC-DC converter 1 can be disconnected. The function switching contactor 12 can disconnect the electrical connection between the AC-DC converter 1 and the reactor (here, the inductor Le). In other words, the reactor is disposed between the AC-DC converter 1 and the inverter 5 via the function switching contactor 12 that disconnects electrical connection. The function switching contactor 12 is closed when the inverter 5 functions as the in-vehicle charging device 10, and electrically connects the AC-DC converter 1 and the reactor. When the coils 7 and the inverter 5 function as the vehicle driving device 9, the function switching contactor 12 is opened.

Thus, it is possible to realize a circuit capable of switching between the function of driving and controlling the rotating electrical machine 70 and the function of charging the DC power supply 3 with the external AC power supply 4 only by changing the connection form to the inverter 5 and the coils 7. That is, the in-vehicle charging device 10 can be configured with a simple configuration. As described above, the in-vehicle charging device 10 of the present embodiment is a bidirectional power conversion device capable of not only power conversion from the AC power to the second DC power but also power conversion from the second DC power to the AC power. By power conversion from the second DC power to the AC power, a function of outputting the AC power from the DC power supply 3 can be realized. When the function of outputting the AC power from the DC power supply 3 is realized, the main contactor 11 and the function switching contactor 12 are closed. The grid contactor 13 is opened or closed according to the form of the output destination of the AC.

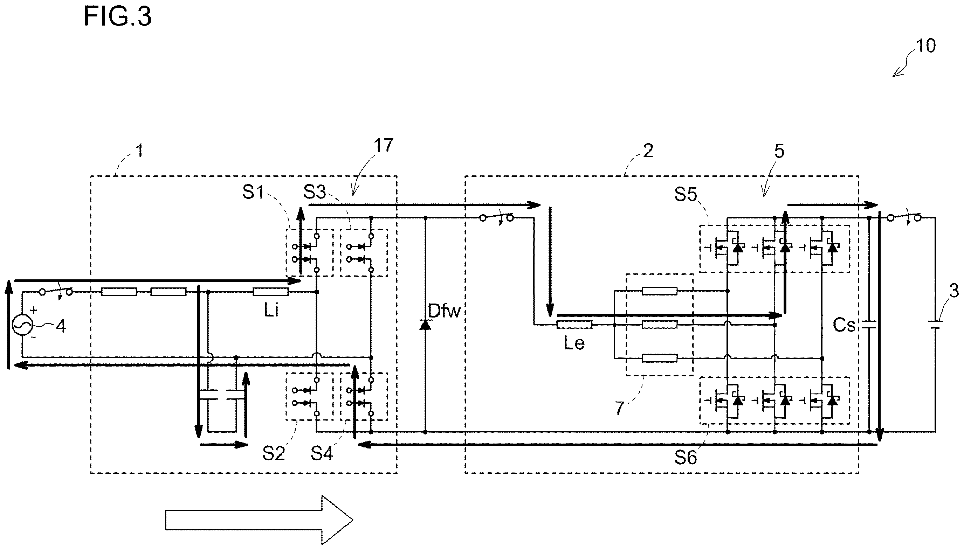

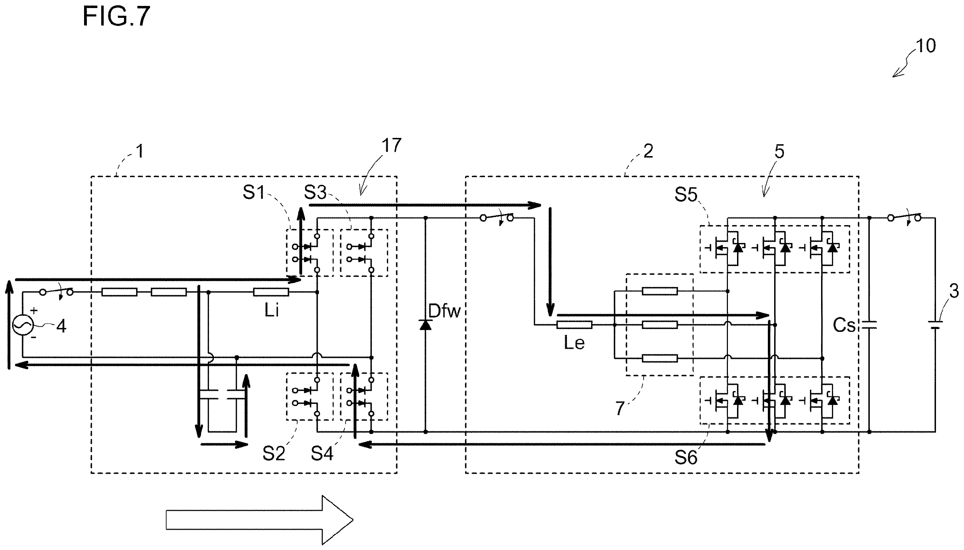

Hereinafter, a case where the in-vehicle charging device 10 functions as an AC-DC buck converter as a whole and a case where the in-vehicle charging device functions as an AC-DC boost converter will be described by illustrating respective current loops. Figs. 3 to 6 illustrate a current loop when the in-vehicle charging device 10 functions as an AC-DC buck converter, and Figs. 7 to 10 illustrate a current loop when the in-vehicle charging device 10 functions as an AC-DC boost converter.

In the description of the current loop, the control states of the switching devices of the full-bridge circuit of the current source active rectifier 17 of the AC-DC converter 1 and the half-bridge circuit realized by the inverter 5 of the DC-DC converter 2 are also shown. The full-bridge circuit of the current source active rectifier 17 includes a first arm in which a first switch S1 and a second switch S2 are connected in series in the described order and a second arm in which a third switch S3 and a fourth switch S4 are connected in series in the described order from the positive electrode side to the negative electrode side of DC. The apparent half-bridge circuit realized by the inverter 5 is configured by connecting the fifth switch S5 and the sixth switch S6 in series in the described order from the positive electrode side to the negative electrode side of the DC.

Table 1 below shows functions of the in-vehicle charging device 10 illustrated in Figs. 3 to 10, directions of the current loop, operation phases, and control states (ON state/OFF state) of the switching device. In Table, "Fig."indicates a number in drawings attached to the present specification, and "Function" indicates whether the function of the in-vehicle charging device 10 is the AC-DC boost converter or the AC-DC buck converter. In addition, "Loop" indicates whether the current loop is a positive current loop (Posi.)or a negative current loop (Nega.). "Phase" indicates an action by the current loop, "C Charging" indicates a state of charging the output capacitor, "L Charging" indicates a state of charging the reactor (the inductor Le, the coils 7), and "Free Wheeling" indicates a state in which the current is flowing back. "S1" to "S6" indicate the first switch S1 described above to a sixth switch S6, "ON" indicates that the switch is controlled to the on-state, and "OFF" indicates that the switch is controlled to the off-state.

**[Table 1]**

| Table 1 | | | | | | | | | |
|---|---|---|---|---|---|---|---|---|---|
| Fig | Function | Loop | Phase | S1 | S2 | S3 | S4 | S5 | S6 |
| 3 | AC/DC Buck | Posi. | C Charging | ON | OFF | OFF | ON | OFF | OFF |
| 4 | AC/DC Buck | Posi. | Free Wheeling | OFF | OFF | ON | ON | OFF | OFF |
| 5 | AC/DC Buck | Nega. | C Charging | OFF | ON | ON | OFF | OFF | OFF |
| 6 | AC/DC Buck | Nega. | Free Wheeling | OFF | OFF | ON | ON | OFF | OFF |
| 7 | AC/DC Boost | Posi. | L Charging | ON | OFF | OFF | ON | OFF | ON |
| 8 | AC/DC Boost | Posi. | Free Wheeling | OFF | OFF | ON | ON | OFF | OFF |
| 9 | AC/DC Boost | Nega. | L Charging | ON | OFF | OFF | ON | OFF | ON |
| 10 | AC/DC Boost | Nega. | Free Wheeling | OFF | OFF | ON | ON | OFF | OFF |

Fig. 3 illustrates a positive current loop when charging the output capacitor Cs (DC link capacitor 6) connected in parallel to the DC power supply 3 in the in-vehicle charging device 10 that functions as an AC-DC buck converter when charging the DC power supply 3. The current from the external AC power supply 4 (on the plus side of the external AC power supply 4 for convenience) forms a current loop returning to the external AC power supply 4 (on the minus side of the external AC power supply 4 for convenience) through the input inductor Li, the first switch S1 in the on state, the reactor (the inductor Le, the coils 7), the freewheel diode connected in anti-parallel to the fifth switch S5 in the off state, the output capacitor Cs, and the fourth switch S4 in the on state. The output capacitor Cs is charged by this current loop. Depending on the structure of the fifth switch S5, the freewheel diode may not be provided, and the current flowing from the freewheel diode may be passed by the body diode of the switching device or the reverse conduction function of the switching device. The same applies to the following description.

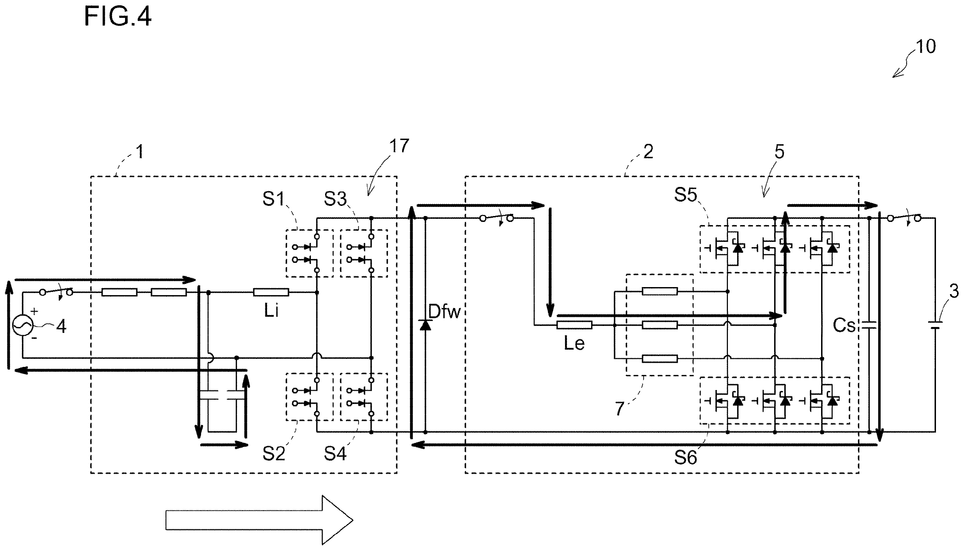

Fig. 4 is a diagram illustrating a reflux loop of a positive current in the in-vehicle charging device 10 functioning as the AC-DC buck converter. In this phase, the first switch S1 and the second switch S2 are in an off state, and the connection between the AC-DC converter 1 and the DC-DC converter 2 is cut off. The current returning from the output capacitor Cs to the external AC power supply 4 side returns to the DC-DC converter 2 through the DC link freewheel diode Dfw. That is, the current flows through the reactor (the inductor Le, the coils 7), the freewheel diode connected in anti-parallel to the fifth switch S5 in the off state, the output capacitor Cs, the DC-link freewheel diode Dfw, and the reactor in this order, and flows back in the DC-DC converter 2.

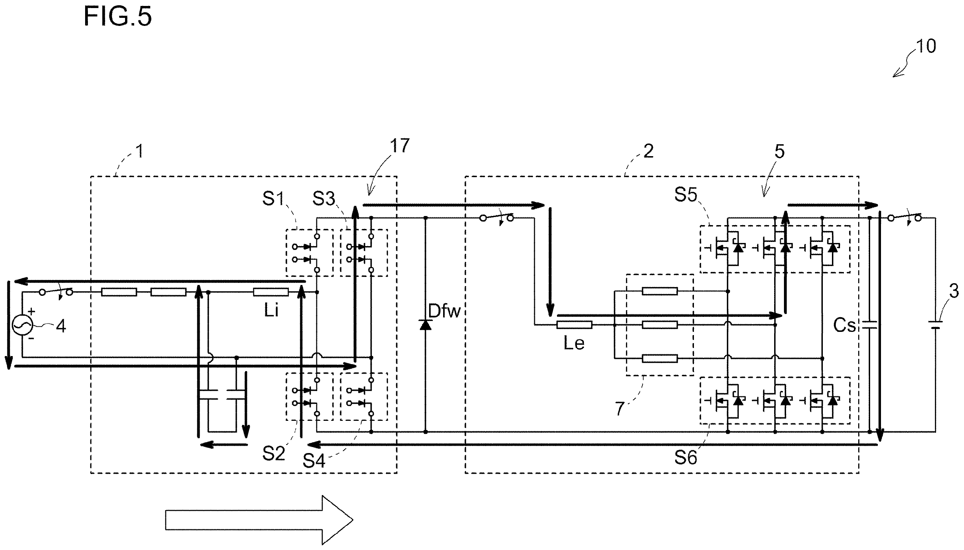

Fig. 5 illustrates a negative current loop when charging the output capacitor Cs connected in parallel to the DC power supply 3 in the in-vehicle charging device 10 that functions as an AC-DC buck converter when charging the DC power supply 3. The current from the external AC power supply 4 (on the minus side of the external AC power supply 4 for convenience) forms a current loop returning to the external AC power supply 4 (on the plus side of the external AC power supply 4 for convenience) through the third switch S3 in the on state, the reactor (the inductor Le, the coils 7), the freewheel diode connected in anti-parallel to the fifth switch S5 in the off state, the output capacitor Cs, the second switch S2 in the on state, and the input inductor Li. The output capacitor Cs is charged by this current loop.

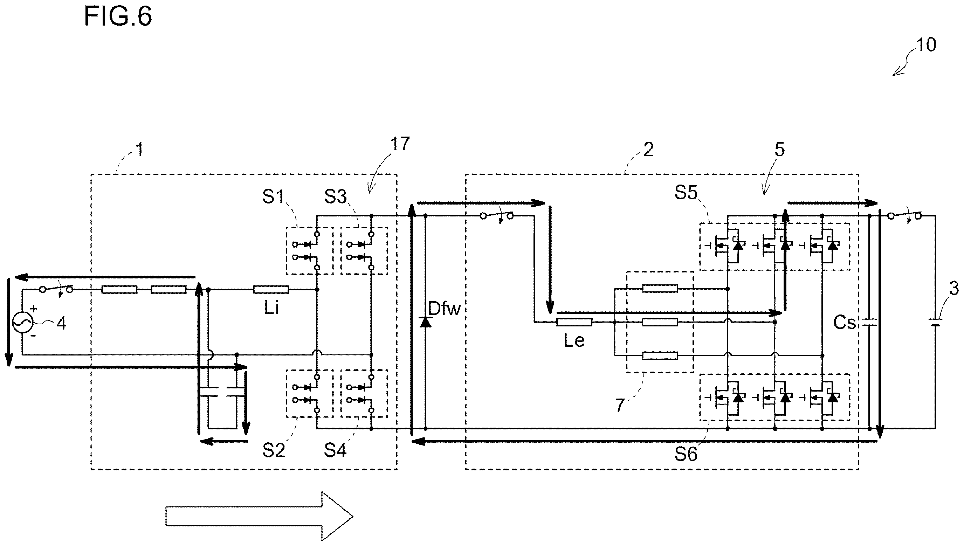

Fig. 6 illustrates a reflux loop of a negative current in the in-vehicle charging device 10 functioning as the AC-DC buck converter. In this phase, the first switch S1 and the second switch S2 are in an off state, and the connection between the AC-DC converter 1 and the DC-DC converter 2 is cut off. The current returning from the output capacitor Cs to the external AC power supply 4 side returns to the DC-DC converter 2 through the DC link freewheel diode Dfw. That is, the current flows through the reactor (the inductor Le, the coils 7), the freewheel diode connected in anti-parallel to the fifth switch S5 in the off state, the output capacitor Cs, the DC-link freewheel diode Dfw, and the reactor in this order, and flows back in the DC-DC converter 2.

Fig. 7 illustrates a positive current loop when charging a reactor in the in-vehicle charging device 10 that functions as an AC-DC boost converter when charging the DC power supply 3. The current from the external AC power supply 4 (on the plus side of the external AC power supply 4 for convenience) forms a current loop returning to the external AC power supply 4 (on the minus side of the external AC power supply 4 for convenience) through the input inductor Li, the first switch S1 in the on state, the reactor (the inductor Le, the coils 7), the sixth switch S6 in the on state, and the fourth switch S4 in the on state. The reactor is charged by this current loop.

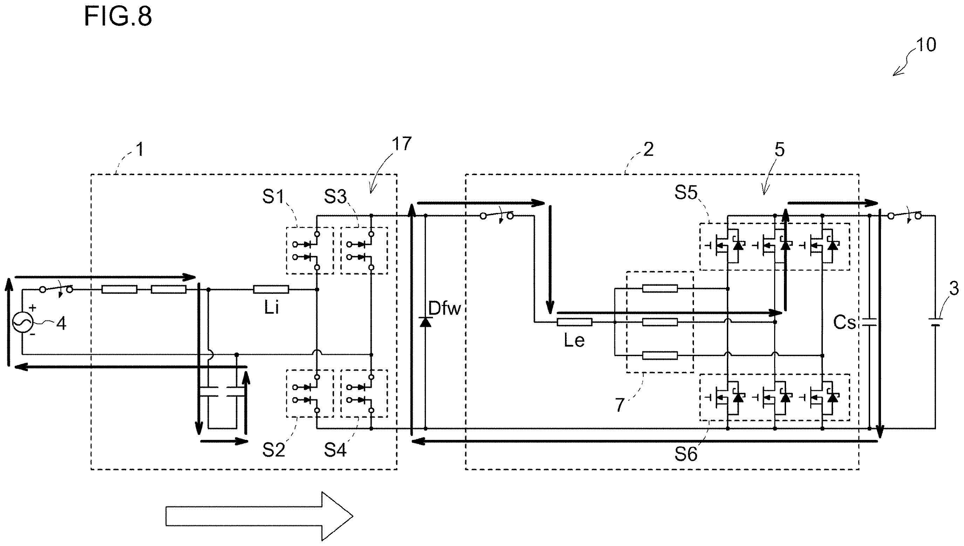

Fig. 8 illustrates a reflux loop of a positive current in the in-vehicle charging device 10 functioning as the AC-DC boost converter. In this phase, the first switch S1 and the second switch S2 are in an off state, and the connection between the AC-DC converter 1 and the DC-DC converter 2 is cut off. The fifth switch S5 and the sixth switch S6 are both controlled to be in the off state, and the current flowing through the reactor (the inductor Le, the coils 7) flows through the freewheel diode connected in anti-parallel to the fifth switch S5 in the off state, the output capacitor Cs, the DC-link freewheel diode Dfw, and the reactor in this order, and flows back in the DC-DC converter 2. The energy stored in the reactor is supplied to the output capacitor Cs.

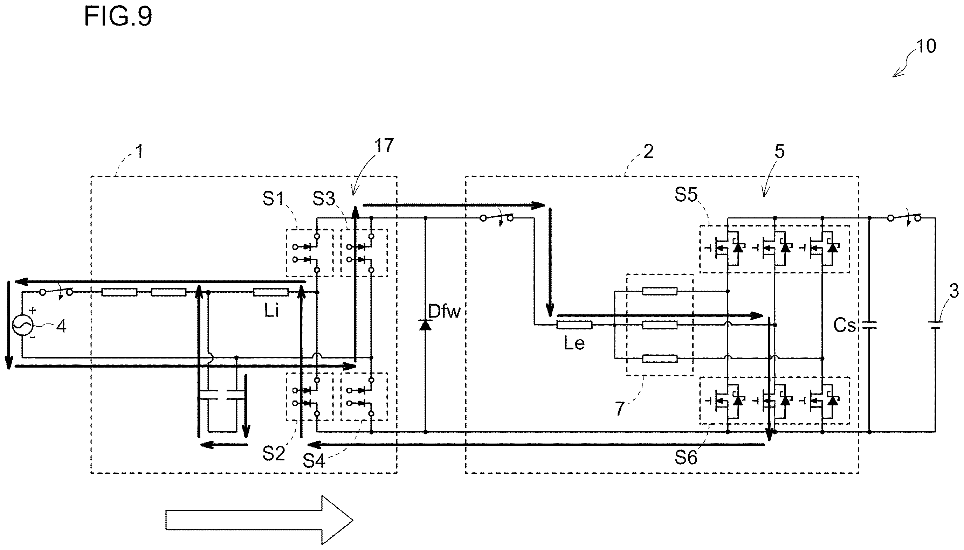

Fig. 9 illustrates a negative current loop when charging a reactor to the DC power supply 3 in the in-vehicle charging device 10 that functions as an AC-DC boost converter when charging the DC power supply 3. The current from the external AC power supply 4 (on the minus side of the external AC power supply 4 for convenience) forms a current loop returning to the external AC power supply 4 (on the plus side of the external AC power supply 4 for convenience) through the third switch S3 in the on state, the reactor (the inductor Le, the coils 7), the sixth switch S6 in the on state, the second switch S2 in the on state, and the input inductor Li. The reactor is charged by this current loop.

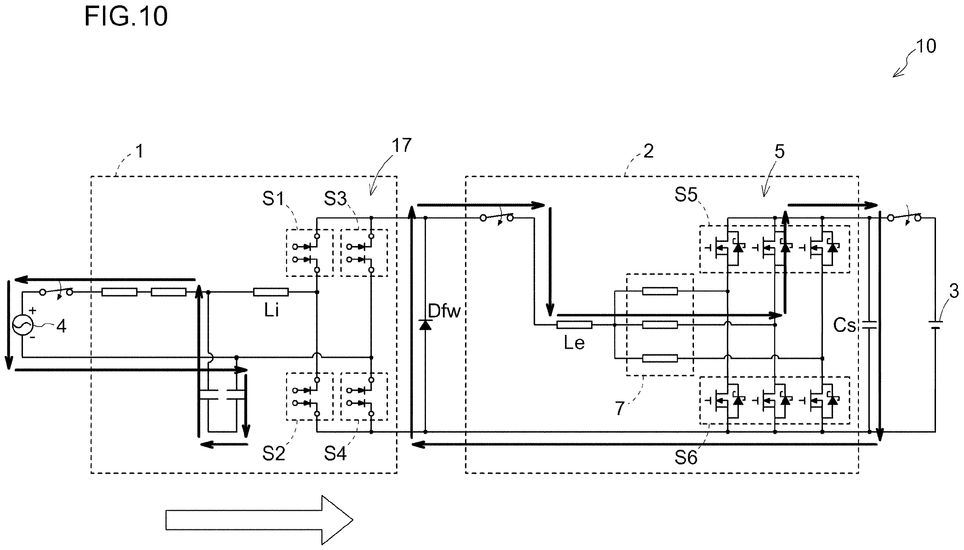

Fig. 10 illustrates a reflux loop of a negative current in the in-vehicle charging device 10 functioning as the AC-DC boost converter. In this phase, the first switch S1 and the second switch S2 are in an off state, and the connection between the AC-DC converter 1 and the DC-DC converter 2 is cut off. The fifth switch S5 and the sixth switch S6 are both controlled to be in the off state, and the current flowing through the reactor (the inductor Le, the coils 7) flows through the freewheel diode connected in anti-parallel to the fifth switch S5 in the off state, the output capacitor Cs, the DC-link freewheel diode Dfw, and the reactor in this order, and flows back in the DC-DC converter 2. The energy stored in the reactor is supplied to the output capacitor Cs.

As described above, since the in-vehicle charging device 10 has the buck function and the boost function with respect to the second DC power (battery power) from the AC power, the in-vehicle charging device 10 having the same hardware configuration can be used in both the case where the rated voltage of the DC power supply 3 is 400 volts and the case where the rated voltage of the DC power supply 3 is 800 volts, for example.

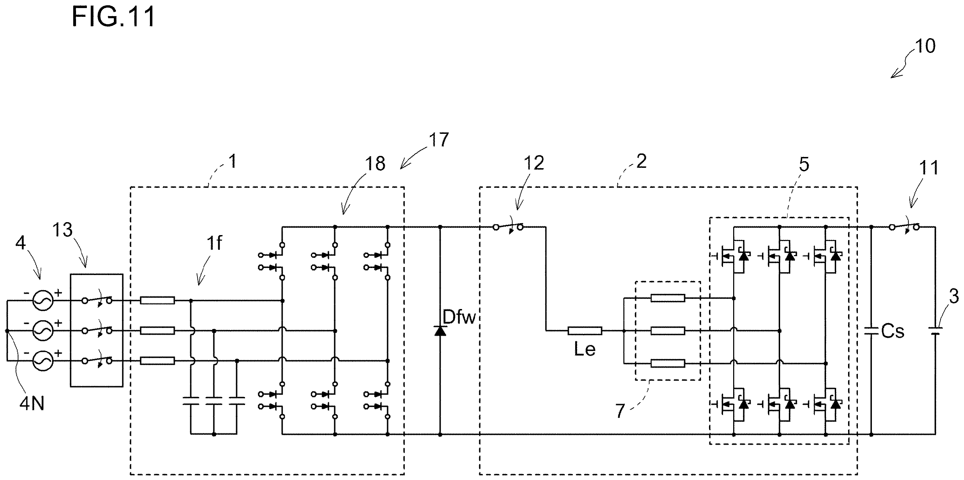

The circuit block diagram of Fig. 11 illustrates a second example of the in-vehicle charging device 10. In the first example, the external AC power supply 4 is a single-phase AC power supply, whereas in the second example, the external AC power supply 4 is an AC power supply of multiple phases. Here, a form is exemplified in which the external AC power supply 4 is connected at a neutral point 4N, and is constituted by three-phase AC power supply having phases different from each other by 2π/3. Corresponding to the AC power supply of three phases, the grid contactor 13 also includes three contacts.

The AC-DC converter 1 of the second example includes a three-phase bridge circuit 18 having three arms corresponding to the three phases in order to convert power from three-phase AC to DC, similarly to the inverter 5. The three-phase bridge circuit 18 also includes a current source active rectifier having a power factor correct function. Other configurations are as described in the first example, and thus detailed description thereof is omitted.

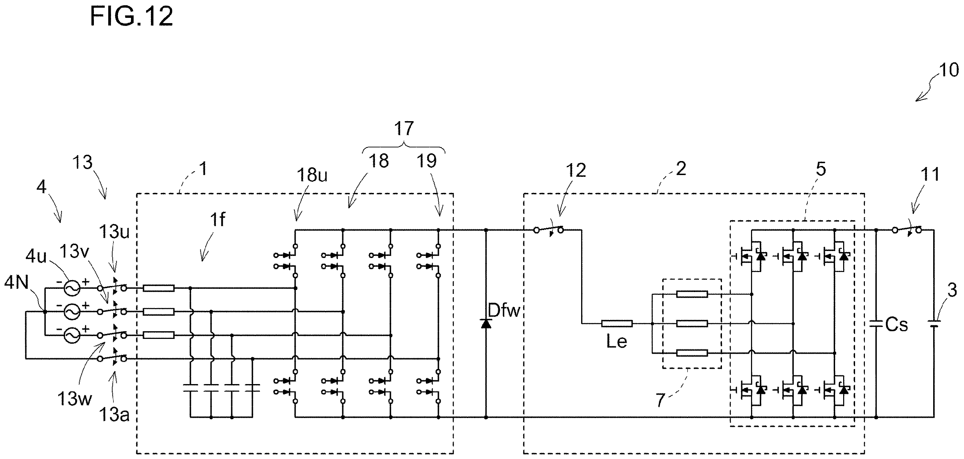

The circuit block diagram of Fig. 12 illustrates a third example of the in-vehicle charging device 10. In the first example, the external AC power supply 4 is a single-phase AC power supply, and in the second example, the external AC power supply 4 is a multiple-phase AC power supply. On the other hand, in the third example, the external AC power supply 4 is configured to be able to connect the external AC power supply 4 of both a single phase and multiple phases (three phases in this case). That is, in the in-vehicle charging device 10 of the third example, the external AC power supply 4 that supplies the single-phase AC and the external AC power supply 4 that supplies the AC of multiple phases can be selectively connected. The grid contactor 13 includes four contacts: a biphase contact 13u, a V-phase contact 13v, and a W-phase contact 13w for connecting the external AC power supply 4 of three phases; and a single-phase contact 13a for connecting the external AC power supply 4 of a single phase. In addition, the AC-DC converter 1 includes the three-phase bridge circuit 18 having three arms corresponding to the respective three phases and a single-phase arm 19 (half-bridge circuit).

When the external AC power supply 4 is a three-phase AC power supply as in the second example, among the four contacts of the grid contactor 13, three contacts of the U-phase contact 13u, the V-phase contact 13v, and the W-phase contact 13w are closed, and the single-phase contact 13a is opened. At the time of AC-DC conversion, the three-phase bridge circuit 18 is subjected to switching control, and the single-phase arm 19 is not subjected to switching control and is always maintained in an off state. That is, in this case, the in-vehicle charging device 10 of the third example is equivalent to the in-vehicle charging device 10 of the second example.

When the external AC power supply 4 is a single-phase AC power supply as in the first example, one of the three phases of the AC power supplies corresponds to the single-phase AC power supply. Here, it is assumed that a U-phase AC power supply 4u denoted by a reference sign in Fig. 12 is disposed as a single-phase AC power supply. Among the four contacts of the grid contactor 13, the single-phase contact 13a and the U-phase contact 13u are closed, and the V-phase contact 13v and the W-phase contact 13w are opened. In the three-phase bridge circuit 18, only the U-phase arm 18u is subjected to switching control, and other arms of two phases are not subjected to switching control and are always maintained in an off state. At the time of AC-DC conversion, the single-phase arm 19 and the U-phase arm 18u are subjected to switching control. That is, in this case, the in-vehicle charging device 10 of the third example is equivalent to the in-vehicle charging device 10 of the first example.

As described above, the in-vehicle charging device 10 of the third example can selectively implement the in-vehicle charging device 10 of the first example and the in-vehicle charging device 10 of the second example. Therefore, it is possible to apply the in-vehicle charging device 10 having the same specification to a large number of vehicle types, and it is easy to reduce the cost by the scale merit of the number of products. Note that, in a case where the external AC power supply 4 that can be connected is limited to a single phase, only the single-phase contact 13a is sufficient for the grid contactor 13 as in the first example. In addition, in the three-phase bridge circuit 18 of the AC-DC converter 1, at least the component cost can be reduced by not mounting the switching device while using the common circuit board. Therefore, for example, it is possible to suppress an increase in the cost of the in-vehicle charging device 10 even in a case where only a single-phase AC power supply is assumed as the external AC power supply 4, and there is a possibility that the in-vehicle charging device 10 of the third example can be realized at a cost substantially equivalent to that of the in-vehicle charging device 10 of the first example due to the above-described scale merit.

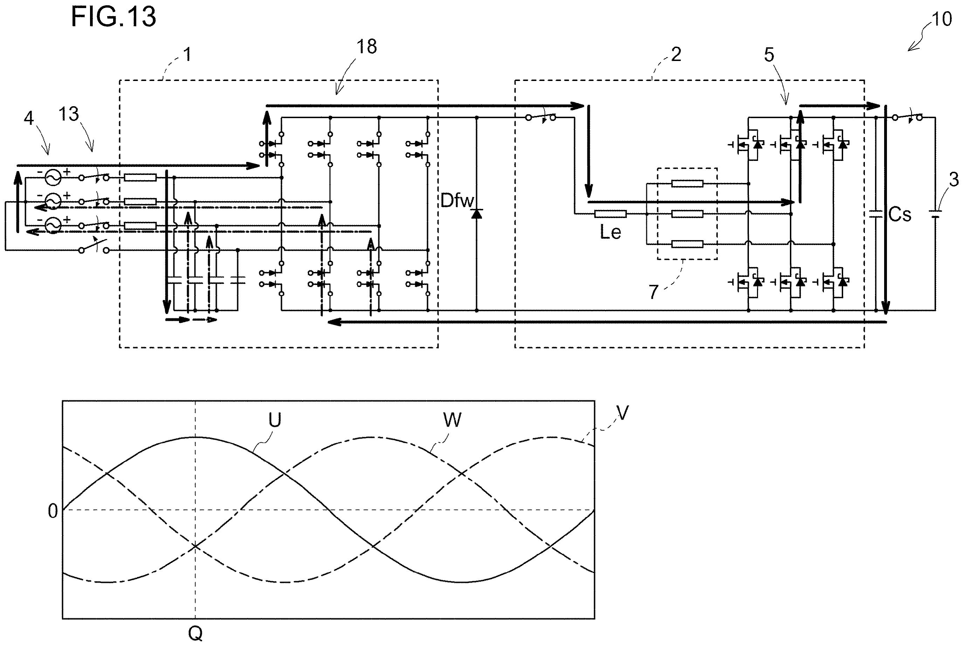

Fig. 13 illustrates an example of a current loop when the in-vehicle charging device 10 of the third example is supplied with power from the external AC power supply 4 of three phases. Fig. 13 illustrates the current loop in a phase Q. A positive current flows through the U phase, and a negative current flows through the V phase and the W phase. The path of the current, particularly the path of the current flowing through the DC-DC converter 2, is the same as the form described above with reference to Fig. 3, and thus detailed description thereof is omitted.

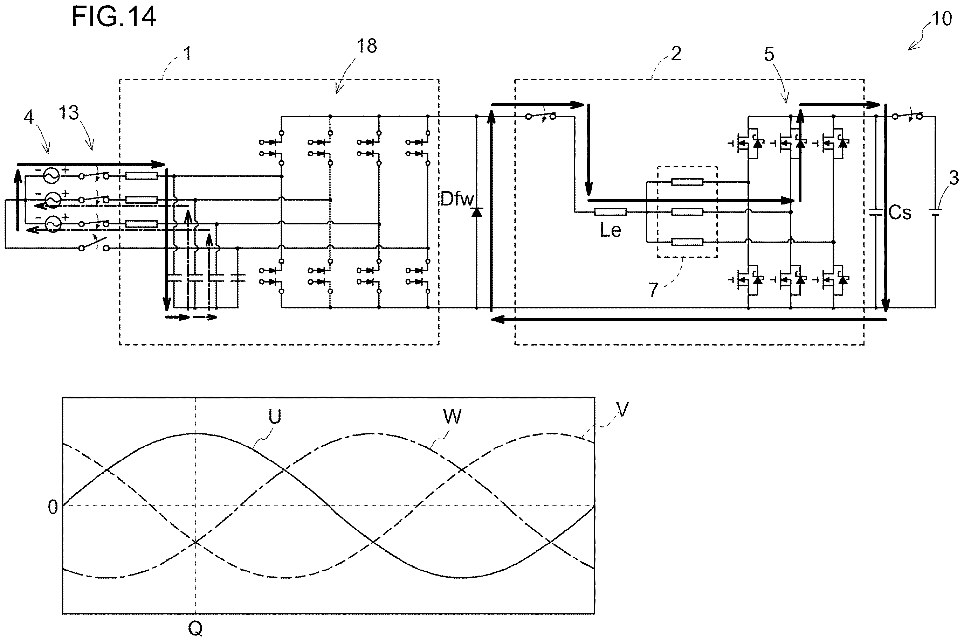

Fig. 14 illustrates an example of a current reflux loop in the in-vehicle charging device 10 of the third example. The path of the current, particularly the path of the current flowing through the DC-DC converter 2, is the same as the form described above with reference to Fig. 4, and thus detailed description thereof is omitted.

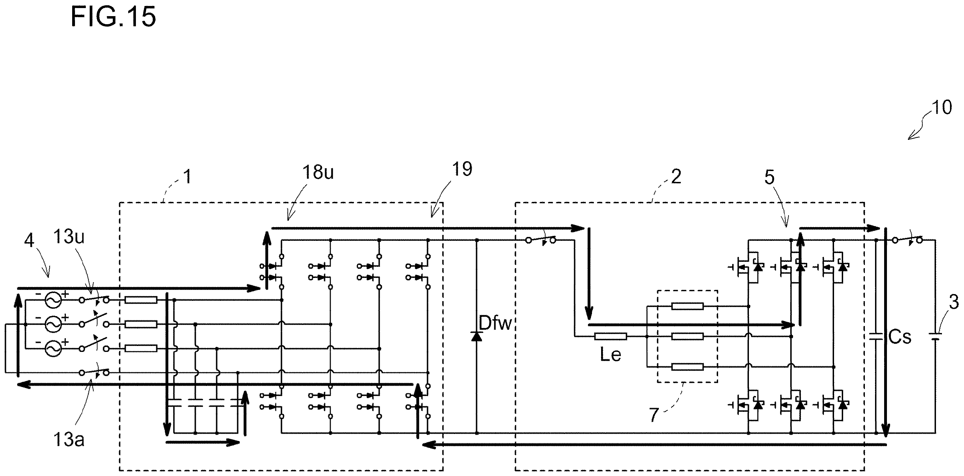

Fig. 15 illustrates an example of a positive current loop when the in-vehicle charging device 10 of the third example is supplied with power from the external AC power supply 4 of a single phase. The path of the current is as described above with reference to Fig. 3, and thus a detailed description thereof will be omitted. In addition, since the reflux loop is also as described above with reference to Fig. 4, illustration and detailed description thereof are omitted.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An in-vehicle charging device (10) that is mounted on a vehicle including a rotating electrical machine (70) that includes coils (7) of multiple phases connected to each other at a neutral point (7N) and serves as a driving power source of a wheel, an inverter (5) that converts power between a direct current (DC) and an alternating current (AC) of multiple phases, and a DC power supply (3) connected to the rotating electrical machine (70) via the inverter (5), and charges the DC power supply (3) with power supplied from an external AC power supply (4), the in-vehicle charging device (10) comprising:
an AC-DC converter (1) that converts power between AC power on the external AC power supply (4) side and first DC power; and
a DC-DC converter (2) that converts power between the first DC power and second DC power on the DC power supply (3) side,
wherein the AC-DC converter (1) includes a current source active rectifier (17) having a power factor correct function,
the DC-DC converter (2) includes a chopper circuit including a reactor disposed on the AC-DC converter (1) side and a half-bridge circuit disposed on the DC power supply (3) side,
the reactor is configured using a plurality of the coils (7),
the half-bridge circuit is configured using the inverter (5), and
the current source active rectifier (17) includes a bidirectional switching device.

2. The in-vehicle charging device (10) according to Claim 1, wherein the reactor includes a series circuit of a plurality of the coils (7) connected in parallel and an inductor (Le) connected to the neutral point (7N) of the plurality of the coils (7).

3. The in-vehicle charging device (10) according to Claim 1 or 2, wherein the reactor is disposed between the AC-DC converter (1) and the inverter (5) via a contactor (12) that disconnects electrical connection.

4. The in-vehicle charging device (10) according to any one of Claims 1 to 3, wherein the external AC power supply (4) that supplies a single-phase AC and the external AC power supply (4) that supplies an AC of multiple phases are selectively connectable.
